# EUROPÄISCHE PATENTSCHRIFT

(11) **EP 2 898 408 B1**
(45) Veröffentlichungstag und Bekanntmachung des Hinweises auf die Patenterteilung: **20.01.2021**
(21) Anmeldenummer: 13742660.7
(22) Anmeldetag: 01.08.2013
(51) Int. Cl.: H04L 29/08, H04W 12/08, G06F 9/46, H04L 29/06

(54) **KOMMUNIKATIONSSYSTEM FÜR EINE FAHRZEUG-ZU-UMGEBUNG KOMMUNIKATION**
COMMUNICATION SYSTEM FOR VEHICLE-TO-ENVIRONMENT COMMUNICATION
SYSTÈME DE COMMUNICATION POUR UNE COMMUNICATION VÉHICULE-ENVIRONNEMENT

(30) Priorität: 21.09.2012 DE 102012217085
(43) Veröffentlichungstag der Anmeldung: 29.07.2015
(73) Patentinhaber: Continental Automotive GmbH, 30165 Hannover (DE)
(72) Erfinder: STÄHLIN, Ulrich, 65760 Eschborn (DE); MENZEL, Marc, 35096 Weimar (Lahn) (DE); GÖTZ, Stefan, 61476 Kronberg / Taunus (DE); SCHÜRMEIER, Martin, 93047 Regensburg (DE); KEIL, Anselm, 65719 Hofheim (DE); KRETSCHMAR, Sven, 65462 Gustavsburg (DE); OWEN, Richard, 93049 Regensburg (DE); RINK, Klaus, 63517 Rodenbach (DE)
(86) Internationale Anmeldenummer: PCT/EP2013/066206
(87) Internationale Veröffentlichungsnummer: WO 2014/044454

(56) Entgegenhaltungen:
- WO-A2-03/100614
- WO-A2-2008/005793
- US-A1- 2010 017 543
- US-A1- 2010 049 819
- PAPADIMITRATOS P ET AL: "Vehicular communication systems: Enabling technologies, applications, and future outlook on intelligent transportation", IEEE COMMUNICATIONS MAGAZINE, IEEE SERVICE CENTER, PISCATAWAY, US, Bd. 47, Nr. 11, 1. November 2009 (2009-11-01), Seiten 84-95, XP011284159, ISSN: 0163-6804, DOI: 10.1109/MCOM.2009.5307471

## Beschreibung

Die Erfindung betrifft ein Kommunikationssystem für eine Fahrzeug-zu-Umgebung-Kommunikation, bei der zu übertragende Daten als Datenpakete drahtlos übertragen werden, insbesondere auf Basis des Standards IEEE 802.11p.

Die WO 2008/005793 A2 beschreibt die Aufteilung von Programmbestandteilen und Betriebssystembestandteilen in einen User Space und einen Kernel Space eines Speichers eines Computers.

Die WO 03/100614 A2 beschreibt ein Kommunikationssystem für ein Kraftfahrzeug, bei dem eine drahtlose Kommunikation mit fahrzeugexternen Komponenten möglich ist.

Die US 2010/0049819 A1 beschreibt ein Kommunikationssystem für ein Kraftfahrzeug, bei dem Anwendungseinheiten und Kommunikationseinheiten voneinander getrennt sind.

Das Kommunikationssystem ist erfindungsgemäß mit einer Kommunikationseinheit und einer Anwendungseinheit ausgestattet, die über eine interne Kommunikationsverbindung miteinander in Verbindung stehen. Bei der internen Kommunikationsverbindung handelt es sich um ein Fahrzeug-internes Bussystem, beispielsweise ein Fahrzeug-Bussystem wie CAN-Bus, Flex Ray oder dergleichen Bussysteme. Auch eine Ethernet-Verbindung ist grundsätzlich denkbar.

Die Kommunikationseinheit weist mindestens eine Hochfrequenz-Antenne insbesondere zur Teilnahme an einer WLAN-Kommunikation nach dem Standard IEEE 801.11p und mindestens einen Sendeempfänger (Transceiver) zur physischen Datenübertragung sowie eine Recheneinheit zur physischen Übertragungssteuerung auf. Die Hochfrequenz-Antenne und der Sendeempfänger bilden Mittel zur Aktivierung der physischen Kommunikationsverbindung und Übertragung der Bit-Dateninformationen entsprechend der Bitübertragungsschicht (Physical Layer) des OSI-Schichtenmodells für Kommunikationsprotokolle.

Die Recheneinheit zur Übertragungssteuerung ist entsprechend der Sicherungsschicht (Data Link Layer) des OSI-Schichtenmodells für Kommunikationsprotokolle dazu eingerichtet, die physische Datenübertragung zu organisieren und den Zugriff auf das Übertragungsmedium zu steuern.

Die mit der Kommunikationseinheit kommunikativ verbundene Anwendungseinheit des Kommunikationssystems weist auch mindestens eine Recheneinheit auf, welche zur Durchführung von Anwendungsprogrammen, zur Steuerung des Zugriffs der Anwendungsprogramme auf die Fahrzeug-zu-Umgebung-Kommunikation und zur Durchführung von datentechnischen Sicherheitsanwendungen, insbesondere einer Authentifizierung von Daten, eingerichtet ist.

Die Steuerung des Zugriffs der Anwendungsprogramme auf die Fahrzeug-zu-Umgebung-Kommunikation bedeutet insbesondere eine Steuerung der logischen Verbindungen für die Prozesskommunikation zweier Systeme entsprechend der Sicherungsschicht (Session Layer) des OSI-Schichtenmodells für Kommunikationsprotokolle, eine Umsetzung einer systemabhängigen Darstellung der Daten in eine systemunabhängige Form für einen syntaktisch korrekten Datenaustausch zwischen unterschiedlichen Systemen entsprechend der Darstellungsschicht (Presentation Layer) des OSI-Schichtenmodells für Kommunikationsprotokolle und die Vermittlung des Zugriffs der Anwendungsprogramme auf die Kommunikation entsprechend der Anwendungsschicht (Application Layer) des OSI-Schichtenmodells für Kommunikationsprotokolle.

Im Rahmen des OSI-Schichtenmodells für Kommunikationsprotokolle sind ferner noch eine Vermittlungsschicht (Network Layer) zur Weitervermittlung der Datenpakete einschließlich der Wegsuche (Routing) zwischen Kommunikationsteilnehmern und eine Transportschicht (Transport Layer) zur Segmentierung des Datenstroms und zur Datenflusskontrolle vorgesehen.

Die genaueren Funktionen der einzelnen Schichten des OSI-Schichtenmodells sind dem Fachmann bekannt und müssen daher an dieser Stelle nicht näher erläutert werden, zumal sie sich auch in vielen Normen insbesondere auch zur Drahtloskommunikation nach dem WLAN-Standard finden.

Die ETSI (European Telecommunications Standards Institute) schlägt in diesem Zusammenhang eine Normierung für die Kommunikation intelligenter Transportsysteme (ITS - Intelligent Transportation Systems), wie sie in der Fahrzeug-zu-Umgebung-Kommunikation eingesetzt werden, im Rahmen eines sogenannten ITS-Station-Modells vor, das inhaltlich auf das OSI-Schichtenmodell zurückgreift.

So bilden die Bitübertragungsschicht und die Sicherungsschicht des OSI-Schichtenmodells eine als "ITS-Access-Technologies" bezeichnete Schicht. Die Vermittlungsschicht und die Transportschicht sind in dem ITS-Station-Modell als "ITS-Network & Transport"-Schicht zusammengefasst. Diese Schichten sind transportorientiert, d. h. sie betreffen die Datenübertragung im physischen Sinne unabhängig von dem Inhalt der zu übertagenden Daten.

Die den vorgenannten Schichten nachfolgenden Schichten (Sicherungsschicht, Darstellungsschicht und Anwendungsschicht) des OSI-Schichtenmodells sind in dem ITS-Station-Modell als "ITS-Facilities"-Schicht zusammengefasst. Sie sind anwendungsorientiert, d. h. bereiten die übertragenen und in dem Kommunikationsnetz zur Verfügung gestellten Daten für die einzelnen Anwendungen vor, ohne dass die Anwendung sich darum kümmern muss, auf welche physische Art die Datenübertragung stattgefunden hat. Dies ermöglicht es, die Anwendungsprogramme auf gewissen Informationsstandards aufzusetzen, ohne dass die Anwendungsprogramme selbst die Kommunikationstechnik beherrschen oder die Daten zur Datenübertragung aufbereiten müssen. Die ITS-Facilities-Schicht stellt somit eine Art Schnittstelle zwischen den Anwendungsprogrammen (Applikationen) und dem technischen Kommunikationsablauf dar.

Vor dem Hintergrund der zuvor geschilderten Aufgaben der einzelnen Schichten ist es daher bisher üblich, die Aufgaben der ITS-Network & Transport-Schicht, d. h. der Vermittlungsschicht und der Transportschicht nach dem OSI-Schichtenmodell, die häufig auch als Kommunikationsstapel bezeichnet werden, mit in die Kommunikationseinheit zu integrieren, welche die Abwicklung der physischen Datenkommunikation steuert.

Bei dieser aus dem Stand der Technik bekannten Aufteilung besteht jedoch der Nachteil, dass während der Abarbeitung des Kommunikationsstapels in dem Kommunikationsmodul, d. h. bei der Erledigung der Aufgaben der ITS-Network & Transport-Schicht, noch keine Sicherheitsinformationen zu den Daten ausgewertet werden sollten, da ansonsten die Datenverbindung zwischen Kommunikationsmodul und Anwendungseinheit ungesichert erfolgt bzw. erneut gesichert werden muss.

Vor diesem Hintergrund ist es Aufgabe der vorliegenden Erfindung, Sicherheitsinformationen während der Abarbeitung des Kommunikationsstapels, d. h. der Erledigung der Aufgaben der ITS-Network & Transport-Schicht, berücksichtigen zu können, beispielsweise zur Priorisierung von Daten.

Diese Aufgabe wird erfindungsgemäß dadurch gelöst, dass die Recheneinheit der Anwendungseinheit zur Weitervermittlung der Datenpakete einschließlich der Wegsuche im Sinne eines Routing zwischen den auch als Netzwerkknoten bezeichneten Kommunikationsteilnehmern eingerichtet wird, d. h. der Vermittlungsschicht (Network Layer) des OSI-Schichtenmodells für Kommunikationsprotokolle entsprechende Aufgaben übernimmt. Ferner wird die Recheneinheit der Anwendungsschicht erfindungsgemäß zur Segmentierung des Datenstroms eingerichtet, d. h. entsprechend den Aufgaben der Transportschicht (Transport Layer) des OSI-Schichtenmodells für Kommunikationsprotokolle ausgestattet.

Da auch die datentechnische Sicherheitsanwendung auf der Anwendungseinheit abgearbeitet wird, stehen somit bereits während der Abarbeitung des Kommunikationsstapels entsprechend der ITS-Network & Transport-Schicht Informationen über die Authentizität der Daten aus der datentechnischen Sicherheitsanwendung zur Verfügung. Diese erfindungsgemäße Partitionierung der Network & Transport-Schicht in der Anwendungseinheit ist insgesamt mit keinem höheren Hardwareaufwand in dem Gesamt-Kommunikationssystem verbunden, da die häufig als Antenneneinheit ausgebildete Kommunikationseinheit nur eine geringere Rechenleistung benötigt. Die höhere Rechenleistung in der Anwendungseinheit kann leicht zur Verfügung gestellt werden, da diese meinst ohnehin gut mit Prozessorleistung ausgestattet ist. Gegebenenfalls kann hier die Prozessorleistung auch noch einmal erhöht werden. Zusätzlich ermöglicht diese Konfiguration kleinere Kommunikationseinheiten, was aufgrund der Platzproblematik an den für die Antenne sinnvollen Anbringungspunkten von immensem Vorteil ist. Der etwas größere Platzbedarf für die Anwendungseinheit stellt typischerweise kein Problem dar. Ebenso verhält es sich mit der Abwärme, die für die Kommunikationseinheit, die in thermisch schwierigeren Umgebungen untergebracht wird, geringer ausfällt und bei der leichter kühlbaren und in thermisch einfacherer Umgebung untergebrachten Anwendungseinheit etwas erhöht ist.

Es ist gemäß einer erfindungsgemäßen Variante des vorgeschlagenen Verfahrens sogar möglich, diese zusätzlich zur Verfügung gestellte Rechenleistung beispielsweise auch für Anwendungsprogramme bei dort erhöhtem Rechenbedarf flexibel mit zu nutzen, wenn gerade kein Rechenbedarf für die Abarbeitung des Kommunikationsstapels besteht. Außerdem wird auf diese Weise eine gute Sicherung der Anwendungseinheit erreicht, die teilweise sicherheitsrelevante Fahrerassistenzsysteme ausführt und dabei auch auf Daten der Fahrzeug-zu-Umgebung-Kommunikation zurückgreifen kann.

Würde stattdessen die datentechnische Sicherheitsanwendung von der Anwendungseinheit auf die Kommunikationseinheit ausgegliedert, um bei der Abarbeitung des Kommunikationsstapels in der Kommunikationseinheit bereits auf die Informationen der datentechnischen Sicherheitsanwendung zugreifen zu können, wäre die interne Kommunikationsverbindung zwischen der Kommunikationseinheit und der Anwendungseinheit, die üblicherweise auch noch durch andere Fahrzeugeinheiten mitgenutzt wird, anfällig gegen mögliche Manipulationen. Durch Eingliederung der Kommunikationsverarbeitung entsprechend der ITS-Network & Transport-Schicht in die Anwendungseinheit wird sogar eine Erhöhung der Sicherheit erreicht, weil die im Rahmen des Kommunikationsstapels abgearbeiteten Daten häufig kryptologisch verschlüsselt oder signiert sind und schwerer zu fälschen sind als Klartext-Informationen, wie beispielsweise die Position oder die Geschwindigkeit eines Kommunikationsteilnehmers im Rahmen der Fahrzeug-zu-Umgebung-Kommunikation.

Gemäß einer bevorzugten Weiterentwicklung des erfindungsgemäßen Kommunikationssystems ist vorgesehen, dass die Recheneinheit der Kommunikationseinheit zu einer Vorverarbeitung der Daten eingerichtet ist, bei der die gesendeten und die empfangenen Daten gefiltert und plausibilisiert werden. Diese erfindungsgemäße Plausibilisierung kann insbesondere im Hinblick auf die Kommunikationswege der Daten und/oder das Datenvolumen erfolgen, d. h. abstrakt formuliert durch eine Überprüfung auf von dem Inhalt der Daten unabhängige Kommunikationsparameter und/oder Kommunikationspartner.

In diesem Zusammenhang hat es sich als besonders sinnvoll herausgestellt, die Vorverarbeitung als eine Art Vorfilterung mit einer dynamischen Parametrierung auszubilden. So ist es möglich, die im Rahmen der Sicherungsschicht erhobenen Daten, beispielsweise MAC-Adressen (Medium Acces Control) zur Plausibilisierung heranzuziehen und aufgrund der Dynamisierung auch eine zeitliche Entwicklung oder Veränderung der Daten zu berücksichtigen. Zusätzlich bietet es sich an, die Daten des Kommunikationsheaders zu überprüfen und auf deren Basis bereits eine Filterung der weiterzuleitenden Daten vorzunehmen, also eine Datenreduktion zu erzielen.

Gemäß einem weiteren vorteilhaften Aspekt des erfindungsgemäßen Kommunikationssystems kann vorgesehen sein, dass die Recheneinheit der Anwendungseinheit als Mehrprozessor-Einheit ausgebildet ist, die mehrere Prozessoren und/oder zumindest einen Prozessor mit mehreren Prozessorkernen aufweist, die zur separaten Abarbeitung von Programmanweisungen oder verschiedenen Anwendungen einrichtbar bzw. eingerichtet sind. Es können auch mehrere Prozessoren mit einem oder mehreren Prozessoren mit mehreren Prozessorkernen kombiniert werden. Hierdurch wird insgesamt ein modularer Aufbau der Anwendungseinheit erreicht, die so flexibel an bestimmte Einsatzzwecke in verschiedenen Fahrzeugen angepasst werden kann und für spezielle Aufgaben optimierbar ist.

Gemäß einer besonders bevorzugten Ausbildung dieser Ausführungsform ist vorgesehen, dass ein erster Prozessor oder ein erster Prozessorkern der Mehrprozessoreinheit dazu eingerichtet ist, aus Daten eines GNSS-Systems, Fahrdynamikdaten und ggf. den empfangenen Daten eine Lokalisierung des eigenen Standorts, ggf. relativ zu dem Standort des Senders der Daten, einschließlich fahrdynamischer Information abzuleiten. Dabei kann auch ein Abgleich der Zeitbasis der verschiedenen Teilnehmer des Kommunikationsnetzes erfolgen, beispielsweise die Zeit eines Clock-Master in dem Kommunikationsnetz zur Synchronisation übernommen werden.

Der hierfür eingesetzte Prozessor ist bevorzugter Weise ein digitaler Signalprozessor (DSP) mit einer auf die durchzuführenden Rechenoperationen optimierten Struktur, da wiederkehrend und quasi kontinuierlich immer wieder dieselben Rechenaufgaben möglichst schnell ausgeführt werden müssen. Der hierfür eingesetzte Prozessor oder Prozessorkern ist dann speziell auf diese Aufgaben hin konstruiert.

Vorzugsweise ist ferner vorgesehen, dass ein zweiter/weiterer Prozessor oder ein zweiter/weiterer Prozessorkern der Mehrprozessoreinheit dazu eingerichtet ist, die kommunikationsorientierten Aufgaben zur Weitervermittlung der Datenpakete einschließlich der Wegsuche und zur Segmentierung des Datenstroms entsprechend der Vorgaben der ITS-Network & Transport-Schicht zu erledigen. Hierfür ist als Prozessor optimaler Weise ein frei konfigurierbarer Mikroprozessor vorgesehen, da die hierbei anfallenden Aufgaben durchaus unterschiedlich sein können, so dass ein flexibel einrichtbarer Prozessor vorteilhaft ist.

Ferner kann ein dritter/weiterer Prozessor oder dritter/weiterer Prozessorkern der Mehrprozessoreinheit dazu eingerichtet sein, die verschiedenen Applikationsprogramme auszuführen. Aufgrund der Vielfalt der verschiedenen Programme eignet sich als Prozessor oder Prozessorkern auch hier ein Mikroprozessor.

Ferner kann als vierter/weiterer Prozessor oder vierter/weiterer Prozessorkern der Mehrprozessoreinheit ein Prozessor zur Ausführung von datentechnischen Sicherheitsanwendungen (Security) vorgesehen sein, der insbesondere als auch separater Chip im Sinne einer Hardwarebeschleunigung ausgebildet sein kann.

Natürlich ist es erfindungsgemäß auch möglich, bestimmte der vorgenannten ersten bis vierten Prozessoren bzw. Prozessorkerne miteinander zu kombinieren, insbesondere wenn der Zeithorizont und die Rechenleistung die Erledigung mehrerer Aufgaben in einem Prozessor/Prozessorkern zulassen.

Auch ist es denkbar, die Rechenleistung eines der Prozessoren oder Prozessorkerne temporär für die Erledigung von Rechenaufgaben der anderen Prozessoren oder Prozessorkerne zur Verfügung zu stellen, wenn der zur Verfügung gestellte Prozessor bzw. Prozessorkern nicht ausgelastet ist und bei den anderen Prozessoren oder Prozessorkernen eine erhöhte Arbeitsbelastung anliegt.

Die Erfindung bezieht sich ferner auf Programmcodemittel zur Einrichtung der Recheneinheit einer Kommunikationseinheit und/oder einer Anwendungseinheit entsprechend dem vorbeschriebenen Kommunikationssystem oder Teilen hiervon.

Eine besonders bevorzugte Verwendung des erfindungsgemäßen Kommunikationssystems liegt in einem Kraftfahrzeug.

Weitere Vorteile, Merkmale und Anwendungsmöglichkeiten der vorliegenden Erfindung ergeben sich auch aus der nachfolgenden Beschreibung eines Ausführungsbeispiels und der Zeichnung.

Es zeigen:
- Fig. 1: eine Übersicht der bekannten Modelle ITS-Station-Modell und OSI-Schichtenmodell und
- Fig. 2: die Architektur eines erfindungsgemäßen Kommunikationssystems mit einer Kommunikationseinheit und einer Applikationseinheit gemäß einer schematischen Darstellung.

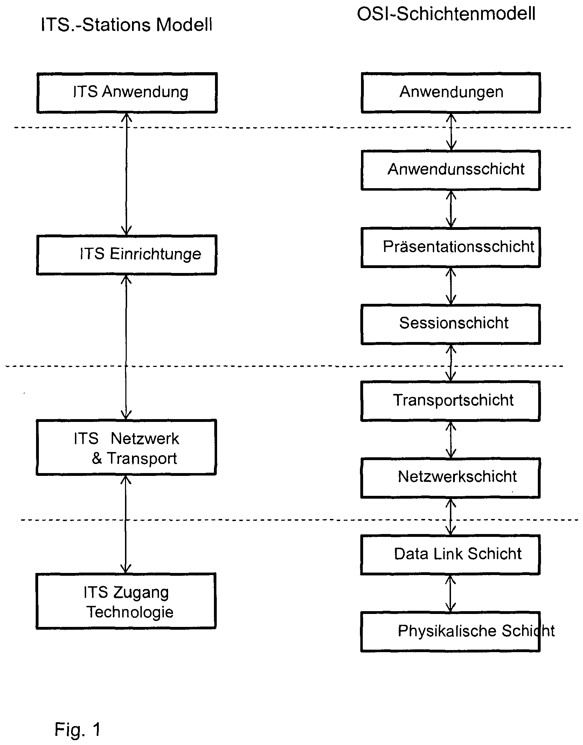

In Fig. 1 ist die bereits ausführlich beschriebene Gegenüberstellung des ITS-Station-Modells für den Kommunikationsablauf im Rahmen des Intelligent Transportation Systems (ITS) und des OSI-Schichtenmodells noch einmal grafisch dargestellt, wobei die jeweils zueinander gehörenden Aufgabenbereiche durch die waagrechten gestrichelten Linien dargestellt wird. Zum OSI-Schichtenmodell gehören streng genommen die oben dargestellten Anwendungen nicht mehr, die jedoch im Hinblick auf die ITS-Application-Schicht zur Entsprechung mit eingezeichnet wurde und die die auf die Kommunikation aufsetzenden Anwendungen betrifft.

Eine ausführliche Beschreibung des Schaubildes wurde bereits gegeben, so dass hier auf weitere Erläuterungen verzichtet werden kann.

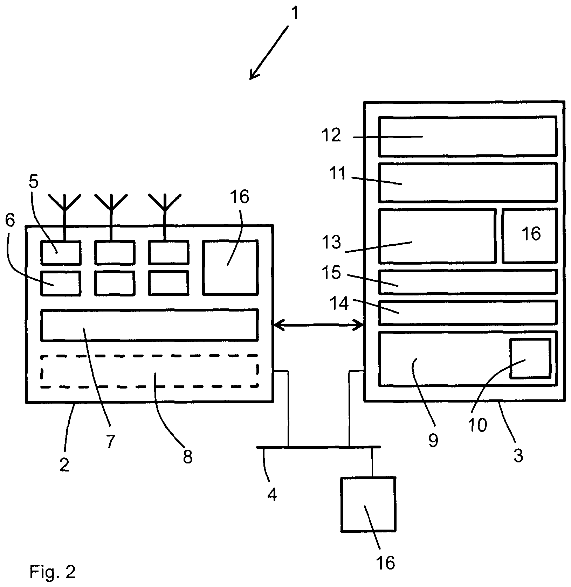

Das in Fig. 2 dargestellte Kommunikationssystem 1 der vorliegenden Erfindung basiert auf dem ITS-Station-Modell und wird nachfolgend ausführlich beschrieben.

Das Kommunikationssystem 1, das in einem nicht dargestellten Fahrzeug eingesetzt wird, weist eine Kommunikationseinheit 2 und eine Anwendungseinheit 3 auf, die über eine als Fahrzeug-Bussystem ausgebildete interne Kommunikationsverbindung 4 miteinander kommunizieren können.

Das Kommunikationssystem 1 ist zur Teilnahme an der Fahrzeug-zu-Umgebung-Kommunikation entsprechend dem Standard IEEE 802.11p eingerichtet. Dazu ist die Kommunikationseinheit 2 mit einer Hochfrequenz-Antenne 5 und einem Sendeempfänger 6 für die WLAN-Kommunikation nach diesem Standard ausgestattet.

Neben der Hochfrequenz-Antenne 5 und dem Sendeempfänger 6 für die Teilnahme an der Fahrzeug-zu-Umgebung-Kommunikation weist die Kommunikationseinheit weitere, nicht mit einem Bezugszeichen versehene Antennen und Sendeempfänger auf, die bspw. für den Mobilfunk und den Empfang von globalen Satellitenpositionssignalen (GNSS) ausgestattet sind. Diese Kommunikation wird im Rahmen der vorliegenden Erfindung jedoch nicht weiter betrachtet.

Ferner weist die Kommunikationseinheit 2 eine Recheneinheit 7 zur physischen Übertragungssteuerung auf, die die physische Datenübertagung organisiert und den Zugriff auf das Übertragungsmedium mittels des Sendeempfängers 6 und der Hochfrequenzantenne 5 koordiniert. Im Rahmen dieser Koordination wird beispielsweise eine MAC-Steuerung (Medium Access Control) realisiert.

Die Recheneinheit 7 zur Übertragungssteuerung, der Sendeempfänger 6 und die Hochfrequenz-Antenne 5 gehören der ITS-Access-Schicht des ITS-Station-Modells an.

Nachdem die Daten empfangen wurden, werden diese, was optional ist, einer Vorfilterung 8 unterzogen, um beispielsweise aufgrund der Kommunikationsadressen und/oder des Kommunikationsvolumens und/oder des Inhalts des Kommunikationsheaders Falschmeldungen oder Betrugsversuche in der Kommunikation herauszufiltern bzw. die Anzahl der an die Anwendungseinheit weiterzuleitenden Botschaften zu reduzieren.

Die ggf. vorgefilterten Daten werden anschließend über das Fahrzeug-Bussystem 4 an die Anwendungseinheit 3 übertragen, in welcher die Daten in einer Recheneinheit 9 zur Weitervermittlung der Datenpakete einschließlich der Wegsuche (Routing) zwischen Kommunikationsteilnehmern und zur Segmentierung des Datenstroms weiterverarbeitet werden. Diese Aufgaben entsprechen dem ITS-Network & Transport Layer.

Parallel dazu werden die Daten in einer vorzugsweise als kombinierte Hard- und Softwarelösung implementierte datentechnischen Sicherheitsanwendung überprüft, so dass beispielsweise die Authentizität der Daten bereits während der Abarbeitung des Kommunikationsstapels zur Verfügung steht, wie er dem ITS-Network & Transport-Layer des ITS-Station-Modells entspricht. Die Abarbeitung der Aufgaben der ITS-Network & Transport Layer in der Recheneinheit 9 sowie die Abarbeitung der datentechnischen Sicherheitsanwendung 10 erfolgen vorzugsweise parallel.

Die Verarbeitung dieser dem ITS-Network & Transport Layer zugehörigen, dem Kommunikationsmanagement zuzurechnenden Aufgaben werden vorzugsweise in einem eigenen Prozessor oder eigenem Prozessorkern der Anwendungseinheit abgearbeitet. Die Verarbeitung der datentechnischen Sicherheitsanwendung wird vorzugsweise in einem dedizierten Prozessor durchgeführt, der vorzugsweise als dedizierter Beschleuniger für die datentechnischen Sicherheitsanwendung ausgebildet ist.

Anschließend erfolgt die Abarbeitung im Rahmen der ITS-Facilities-Schicht, in der logische Verbindungen für die Prozesskommunikation mehrerer Systeme organisiert, die systemabhängige Darstellung bestimmter Informationen in eine systemabhängige Form umgesetzt und der Zugriff der Anwendungsprogramme auf die Kommunikation vermittelt werden.

Im Rahmen dieser Abarbeitung findet bei der Fahrzeug-zu-Umgebung-Kommunikation insbesondere eine Lokalisierung 11 statt, bei der die Fahrzeugposition und fahrzeugdynamische Daten ermittelt werden. Zusätzlich werden in Form eines Fahrzeugdatenproviders Daten aus dem Fahrzeug bereitgestellt, die bevorzugt von einem Fahrzeugbus abgegriffen werden.

Zur Vorbereitung und zur zentralen Darstellung an nachfolgende Anwendungen 12, die vorzugsweise wiederrum in einem eigenen Prozessor oder Prozessorkern ablaufen, wird basierend auf dem in der Lokalisierung 11 erhaltenen Daten eine lokale dynamische Karte und/oder ein Relevanzfilter für die Daten in einer Datenaufbereitung 13 erzeugt. Ferner werden Cooperative Awareness Messages 14 (CAM) zur dauerhaften Aussendung erzeugt, die eine Basisinformation der an der Fahrzeug-zu-Umgebung-Kommunikation teilnehmenden Fahrzeuge und Infrastruktureinheiten zusammenstellen und von allen Teilnehmern empfangen werden.

Die Lokalisierung 11, die Datenaufbereitung 13 und die Behandlung der Cooperative Awareness Messages 14 (CAM) ist der ITS-Facilities-Schicht zuzuordnen, mit der der eigentliche Kommunikationsablauf beendet ist.

Die so erzeugten Daten stehen dann den Anwendungen 12 zur Verfügung, zu denen im Falle einer erkannten Gefahrmeldung beispielsweise auch das Aussenden von sogenannten DENM-Mitteilungen 15 (Decentralized Environmental Notification Mesage) gehört.

Vorzugsweise findet auch die Abarbeitung der Lokalisierung 11in einem eigenen Prozessor oder Prozessorkern statt. Entsprechendes gilt für die Anwendungen 12 einschließlich der DENM-Mitteilungen 15. Die Abarbeitung der Datenaufbereitung 13 und der Cooperative Awareness Messages 14 erfolgt vorzugsweise auf dem Prozessor oder Prozessorkern für das Kommunikationsmanagement, zusammen mit den Modulen für den ITS Network & Transport Layer.

Jede der teilnehmenden Einheiten, also insbesondere die Kommunikationseinheit 2, die Anwendungseinheit 3 und ggf. auch andere an die interne Kommunikationsverbindung 4 angeschlossene Einheiten verfügen über einen Zeitgeber 16, von denen ein Clock-Master die Systemzeit vorgeben bzw. synchronisieren kann.

Durch die Verwendung mehrerer Prozesssensoren bzw. Prozessorkerne für die unterschiedlichen Aufgaben der Anwendungseinheit 3 und die Verlagerung der Recheneinheit 9 zur Weitervermittlung der Datenpakete und Segmentierung des Datenstroms in die Anwendungseinheit 3 kann die datentechnische Sicherheitsanwendung 10 optimal in den Kommunikationsstapel des Kommunikationsablaufs gemäß dem ITS-Station-Modell einbezogen werden, so dass Sicherheitsinformationen, wie beispielsweise eine Authentifizierung der Daten, bereits in die Abarbeitung des Kommunikationsflusses einfließen kann.

## Patentansprüche

1. Kommunikationssystem für eine Fahrzeug-zu-Umgebung-Kommunikation, bei der zu übertragende Daten als Datenpakete drahtlos übertragen werden, mit
- einer Kommunikationseinheit (2) und einer Anwendungseinheit (3), welche voneinander räumlich getrennt und über eine fahrzeuginternes Bussystem (4) miteinander verbunden sind, wobei
- die Kommunikationseinheit (2) eine Hochfrequenz-Antenne (5) und einen Sendeempfänger (6) zur physischen Datenübertragung sowie eine Recheneinheit (7) zur physischen Übertragungssteuerung aufweist,
wobei die Anwendungseinheit (3) mindestens eine Recheneinheit (9) aufweist, welche zur Durchführung von Anwendungsprogrammen (12) und zur Steuerung des Zugriffs der Anwendungsprogramme auf die Fahrzeug-zu-Umgebung-Kommunikation und zur Durchführung von datentechnischen Sicherheitsanwendungen (10) eingerichtet ist,
wobei die Recheneinheit (9) der Anwendungseinheit (3) eingerichtet ist, der Vermittlungsschicht, Network Layer, des OSI-Schichtenmodells für Kommunikationsprotokolle entsprechende Aufgaben von der Kommunikationseinheit bereitzustellen, indem die Kommunikationseinheit (2) und ihre Recheneinheit (7) eingerichtet sind, Funktionen der Bitübertragungsschicht und der Sicherungsschicht des OSI-Schichtenmodells bereitzustellen, und die mindestens eine Recheneinheit (9) der Anwendungseinheit (3 eingerichtet ist, Funktionen der Vermittlungsschicht und der Transportschicht des OSI-Schichtenmodells bereitzustellen, und damit zur Weitervermittlung der Datenpakete einschließlich der Wegsuche zwischen Kommunikationsteilnehmern und zur Segmentierung des Datenstroms eingerichtet ist.

2. Kommunikationssystem nach Anspruch 1, **dadurch gekennzeichnet, dass** die Recheneinheit (7) der Kommunikationseinheit (2) zu einer Vorverarbeitung (8) der Daten eingerichtet ist, bei der die gesendeten und die empfangenen Daten gefiltert und plausibilisiert werden.

3. Kommunikationssystem nach Anspruch 2, **dadurch gekennzeichnet, dass** die Vorverarbeitung als Vorfilterung (8) mit dynamischer Parametrisierung ausgebildet ist.

4. Kommunikationssystem nach einem der vorhergehenden Ansprüche, **dadurch gekennzeichnet, dass** die Recheneinheit (9) der Anwendungseinheit als Mehrprozessor-Einheit ausgebildet ist, die mehrere Prozessoren und/oder einen Prozessor mit mehreren Prozessorkernen aufweist.

5. Kommunikationssystem nach Anspruch 4, **dadurch gekennzeichnet, dass** ein erster Prozessor oder ein erster Prozessorkern der Mehrprozessoreinheit dazu eingerichtet ist, aus den empfangen Daten eine Lokalisierung (11) des eigenen Standorts einschließlich fahrdynamischer Informationen abzuleiten.

6. Kommunikationssystem nach Anspruch 4 oder 5, **dadurch gekennzeichnet, dass** ein zweiter Prozessor oder ein zweiter Prozessorkern der Mehrprozessoreinheit dazu eingerichtet ist, die kommunikationsorientierten Aufgaben (9) durchzuführen.

7. Kommunikationssystem nach einem der Ansprüche 4 bis 6, **dadurch gekennzeichnet, dass** ein dritter Prozessor oder ein dritter Prozessorkern der Mehrprozessoreinheit dazu eingerichtet ist, Applikationsprogramme (12) auszuführen.

8. Kommunikationssystem nach einem der Ansprüche 4 bis 7, **dadurch gekennzeichnet, dass** ein vierter Prozessor oder ein vierter Prozessorkern der Mehrprozessoreinheit dazu eingerichtet ist, datentechnische Sicherheitsanwendungen (10) auszuführen.

9. Programmcodemittel zur Einrichtung der Recheneinheit einer Kommunikationseinheit und einer Anwendungseinheit entsprechend dem Kommunikationssystem nach einem der Ansprüche 1 bis 8, wenn die Programmcodemittel ausgeführt werden.

10. Verwendung eines Kommunikationssystems nach einem der Ansprüche 1 bis 8 in einem Kraftfahrzeug.

## Claims

1. Communication system for vehicle-to-environment communication in which data to be transmitted are transmitted wirelessly as data packets, having
- a communication unit (2) and an application unit (3) that are physically separate from one another and connected to one another via a vehicle-internal bus system (4), wherein the communication unit (2) has a radio-frequency antenna (5) and a transceiver (6) for physical data transmission and also a computation unit (7) for physical transmission control, wherein the application unit (3) has at least one computation unit (9) that is set up to execute application programs (12) and to control access by the application programs to the vehicle-to-environment communication and to execute data security applications (10), wherein the computation unit (9) of the application unit (3) is set up to provide the network layer of the OSI layer model for communication protocols with appropriate tasks from the communication unit by virtue of the communication unit (2) and its computation unit (7) being set up to provide functions of the physical layer and the data link layer of the OSI layer model, and the at least one computation unit (9) of the application unit (3) being set up to provide functions of the network layer and the transport layer of the OSI layer model, and hence to forward the data packets, including pathfinding, between communication subscribers and to segment the data stream.

2. Communication system according to Claim 1, **characterized in that** the computation unit (7) of the communication unit (2) is set up to preprocess (8) the data, which involves the sent and received data being filtered and plausibilized.

3. Communication system according to Claim 2, **characterized in that** the preprocessing is in the form of prefiltering (8) with dynamic parameterization.

4. Communication system according to one of the preceding claims, **characterized in that** the computation unit (9) of the application unit is in the form of a multiprocessor unit that has a plurality of processors and/or a processor having a plurality of processor cores.

5. Communication system according to Claim 4, **characterized in that** a first processor or a first processor core of the multiprocessor unit is set up to derive a localization (11) for its own position, including driving-dynamics information, from the received data.

6. Communication system according to Claim 4 or 5, **characterized in that** a second processor or a second processor core of the multiprocessor unit is set up to perform the communication-oriented tasks (9).

7. Communication system according to one of Claims 4 to 6, **characterized in that** a third processor or a third processor core of the multiprocessor unit is set up to execute application programs (12).

8. Communication system according to one of Claims 4 to 7, **characterized in that** a fourth processor or a fourth processor core of the multiprocessor unit is set up to execute data security applications (10).

9. Program code means for setting up the computation unit of a communication unit and of an application unit in accordance with the communication system according to one of Claims 1 to 8 when the program code means are executed.

10. Use of a communication system according to one of Claims 1 to 8 in a motor vehicle.

## Revendications

1. Système de communication pour une communication véhicule-environnement, pour laquelle des données à transmettre sont transmises sans fil sous forme de paquets de données, comprenant
- une unité de communication (2) et une unité d'application (3), qui sont spatialement séparées l'une de l'autre et reliées entre elles par l'intermédiaire d'un système de bus (4) situé à l'intérieur du véhicule,
dans lequel l'unité de communication (2) comporte une antenne haute fréquence (5) et un émetteur-récepteur (6) pour la transmission physique de données ainsi qu'une unité de calcul (7) pour la commande de la transmission physique,
dans lequel l'unité d'application (3) comporte au moins une unité de calcul (9) qui est conçue pour exécuter des programmes d'application (12) et pour commander l'accès des programmes d'application à la communication véhicule-environnement et pour exécuter des applications de sécurité par traitement de données (10),
dans lequel l'unité de calcul (9) de l'unité d'application (3) est conçue pour fournir à la couche de commutation, ou couche réseau, du modèle de couche OSI, en provenance de l'unité de communication, des tâches correspondant à des protocoles de communication,
en raison du fait que l'unité de communication (2) et son unité de calcul (7) sont conçues pour fournir des fonctions de la couche de transmission de bits et de la couche de liaison du modèle de couche OSI, et que ladite au moins une unité de calcul (9) de l'unité d'application (3) est conçue pour fournir des fonctions de la couche réseau et de la couche de transport du modèle de couche OSI, et est donc conçue pour transmettre les paquets de données, y compris la recherche de trajet entre des participants à la communication, et pour segmenter le flux de données.

2. Système de communication selon la revendication 1, **caractérisé en ce que** l'unité de calcul (7) de l'unité de communication (2) est conçue pour effectuer un prétraitement (8) des données lors duquel les données émises et reçues sont filtrées et leur plausibilité est vérifiée.

3. Système de communication selon la revendication 2, **caractérisé en ce que** le prétraitement est réalisé sous la forme d'un pré-filtrage (8) à paramétrage dynamique.

4. Système de communication selon l'une des revendications précédentes, **caractérisé en ce que** l'unité de calcul (9) de l'unité d'application est réalisée sous la forme d'une unité multiprocesseur qui comporte plusieurs processeurs et/ou un processeur doté de plusieurs cœurs de processeur.

5. Système de communication selon la revendication 4, **caractérisé en ce qu'**un premier processeur ou un premier noyau de processeur de l'unité multiprocesseur est conçu pour déduire à partir des données reçues une localisation (11) de son propre emplacement, y compris des informations de dynamique de conduite.

6. Système de communication selon la revendication 4 ou 5, **caractérisé en ce qu'**un deuxième processeur ou un deuxième noyau de processeur de l'unité multiprocesseur est conçu pour exécuter les tâches orientées communication (9).

7. Système de communication selon l'une des revendications 4 à 6, **caractérisé en ce qu'**un troisième processeur ou un troisième noyau de processeur de l'unité multiprocesseur est conçu pour exécuter des programmes d'application (12).

8. Système de communication selon l'une des revendications 4 à 7, **caractérisé en ce qu'**un quatrième processeur ou un quatrième noyau de processeur de l'unité multiprocesseur est conçu pour exécuter des applications de sécurité par traitement de données (10).

9. Moyens à code de programme destinés à configurer l'unité de calcul d'une unité de communication et d'une unité d'application d'une manière qui correspond au système de communication selon l'une des revendications 1 à 8 lorsque les moyens à code de programme sont mis en œuvre.

10. Utilisation d'un système de communication selon l'une des revendications 1 à 8 dans un véhicule automobile.
